Europäisches Patentamt

European Patent Office

Office européen des brevets

(11) Veröffentlichungsnummer: **0 241 793**
**A2**

## (12) EUROPÄISCHE PATENTANMELDUNG

(21) Anmeldenummer: **87104648.8**

(22) Anmeldetag: **28.03.87**

(51) Int. Cl.4: **H04B 7/08**

(30) Priorität: **11.04.86 DE 3612235**

(43) Veröffentlichungstag der Anmeldung:
**21.10.87 Patentblatt 87/43**

(84) Benannte Vertragsstaaten:
**AT CH DE FR GB IT LI SE**

(71) Anmelder: **Blaupunkt-Werke GmbH**
**Robert-Bosch-Strasse 200**
**D-3200 Hildesheim(DE)**

(72) Erfinder: **Vathauer, Klaus**
**Hammersteinstrasse 75**
**D-3200 Hildesheim(DE)**

(74) Vertreter: **Eilers, Norbert, Dipl.-Phys.**
**Robert-Bosch-Strasse 200**
**D-3200 Hildesheim(DE)**

(54) **Verfahren und Schaltungsanordnung zum Empfang von Radiowellen mit mehreren Antennen.**

(57) Bei einem Verfahren zum Empfang von Radiowellen mit mehreren Antennen, wobei mehrere Zwischenfrequenzsignale gebildet werden, der Pegel jedes der Zwischenfrequenzsignale gemessen wird und durch Vergleich der gemessenen Pegelwerte eine Auswahl zwischen den Zwischenfrequenzsignalen getroffen wird, werden die Zwischenfrequenzsignale mit steuerbaren Übertragungsfaktoren zur Pegelmessung geleitet. Bei Änderung der Auswahl wird der Übertragungsfaktor des zuvor ausgewählten Zwischenfrequenzsignals gegenuber dem Übertragungsfaktor des neu ausgewählten Zwischenfrequenzsignals verringert.

Fig.1

## Verfahren und Schaltungsanordnung zum Empfang von Radiowellen mit mehreren Antennen

Die Erfindung geht aus von einem Verfahren nach der Gattung des Hauptanspruchs.

Es sind schon Verfahren zum Empfang von Radiowellen mit mehreren Antennen bekannt, bei welchen jeweils aus einem Antennensignal ein Zwischenfrequenzsignal gebildet wird, die Zwischenfrequenzsignale bezüglich ihres Pegels untereinander verglichen werden und dasjenige mit dem größten Pegel zur weiteren Verstärkung und Demodulation ausgewählt wird. Dabei ist an den Ausgängen der Abstimmschaltungen (Tuner) ein Umschalter vorgesehen, welcher das jeweils ausgewählte Signal zum Zwischenfrequenzverstärker weiterleitet. Außerdem sind die Ausgänge mit je einem Hilfs-Zwischenfrequenzverstärker verbunden. Mit Hilfe je eines daran angeschlossenen Amplitudendemodulators wird dann eine dem jeweiligen Pegel entsprechende Spannung abgeleitet.

In einer Vergleichsschaltung werden die den Pegeln entsprechenden Spannungen miteinander verglichen. Mit dem Ergebnis des Vergleichs wird der Umschalter gesteuert. Dabei kann das System ins Schwingen geraten, da der Eingang des Zwischenfrequenzverstärkers den jeweiligen Ausgang der Abstimmschaltung belastet, wodurch im Moment des Zuschaltens der Ausgangspegel der betreffenden Abstimmschaltung sinkt, worauf auf die andere Antenne umgeschaltet wird. Der zugehörige Ausgangsverstärker wird dann wieder durch den Eingangswiderstand des Zwischenfrequenzverstärkers belastet, was wieder zu einer Umschaltung führt. Bei gleichbleibenden Eingangspegeln kann sich dieser Vorgang laufend wiederholen.

Ferner können auch Pegelschwankungen zum Umschalten führen, die so gering sind, daß sie an sich keinen Einfluß auf die Signalqualität haben, eine Umschaltung also an sich unnötig wäre.

Zur Vermeidung dieser Nachteile ist es bekannt, die Vergleichsschaltung mit einer Hysterese zu versehen. Es hat sich jedoch herausgestellt, daß diese bekannten Verbesserungen wegen Nichtlinearitäten des Zusammenhangs zwischen der Pegelmeßspannung und dem Eingangspegel nicht zufriedenstellend arbeiten.

Das erfindungsgemäße Verfahren mit den kennzeichnenden Merkmalen des Hauptanspruchs hat demgegenüber den Vorteil, daß einerseits der Belastung durch den Zwischenfrequenzverstärker weitgehend exakt entgegengesteuert werden kann und daß andererseits eine auf den Eingangspegelhub genau angepaßte Hysterese eingestellt werden kann, die praktisch unabhängig von der absoluten Höhe der Feldstärke ist.

Durch die in den Unteransprüchen aufgeführten Maßnahmen sind vorteilhafte Schaltungsanordnungen zur Durchführung des im Hauptanspruch angegebenen Verfahrens möglich.

Ein Ausführungsbeispiel der Erfindung ist in der Zeichnung an Hand mehrerer Figuren dargestellt und in der nachfolgenden Beschreibung näher erläutert.
Es zeigt:

Fig. 1 ein Blockschaltbild einer Anordnung zur Durchführung des erfindungsgemäßen Verfahrens und

Fig. 2 ein Diagramm mit der Kennlinie einer Pegelmeßschaltung.

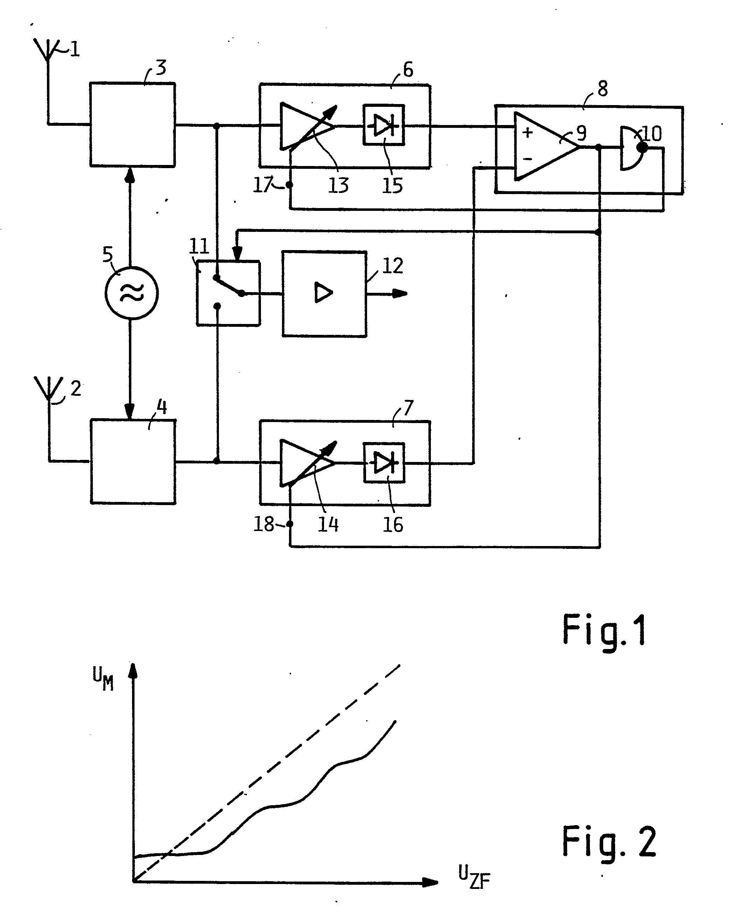

Bei der Schaltungsanordnung nach Fig. 1 werden Signale von zwei Antennen 1, 2 jeweils einer Abstimmschaltung (Tuner) 3, 4 zugeführt. Beide Tuner werden aus einem durchstimmbaren HF-Oszillator 5 versorgt. Die an den Ausgängen der Tuner 3, 4 anstehenden Zwischenfrequenzsignale werden je einer Pegelmeßschaltung 6, 7 zugeführt, an deren Ausgang eine Spannung zur Verfügung steht, welche den Pegel des Zwischenfrequenzsignals bzw. die Feldstärke an der jeweiligen Antenne darstellt.

Wie Fig. 2 zeigt, ist die Ausgangsspannung $U_M$ der Pegelmeßeinrichtung 6, 7 jedoch nicht proportional zur Eingangsspannung $U_{ZF}$, was durch die gestrichelte Linie angedeutet ist, sondern weist Nichtlinearitäten auf. Dieses ist in Fig. 2 beispielhaft als durchgezogene Linie dargestellt.

Die Ausgangsspannungen beider Pegelmeßschaltungen 6, 7 (Fig. 1) werden einer Vergleichsschaltung 8 zugeführt, welche im wesentlichen aus einem Differenzverstärker 9 und einem Signalinverter 10 besteht. Mit dem Ausgangssignal des Differenzverstärkers 9 wird ein Umschalter 11 gesteuert, mit dem jeweils einer der Ausgänge der Tuner 3, 4 mit dem Eingang des Zwischenfrequenzverstärkers 12 verbunden wird. Dem Zwischenfrequenzverstärker 12 folgen weitere an sich bekannte Schaltungen, deren Erläuterung für das Verständnis der vorliegenden Erfindung nicht erforderlich ist. Sie sind deshalb in Fig. 1 nicht dargestellt.

Die Pegelmeßeinrichtungen 6, 7 bestehen aus jeweils einem Zwischenfrequenzverstärker 13, 14 mit steuerbarer Verstärkung und einem nachgeschalteten Amplitudendemodulator 15, 16. Zur Unterscheidung der Zwischenfrequenzverstärker 13, 14 vom Zwischenfrequenzverstärker 12 werden diese im folgenden als Hilfs-Zwischenfrequenzverstärker bezeichnet. Die Hilfs-Zwischenfrequenzverstärker 13, 14 können übrigens einfacher als der Zwischenfrequenzverstärker 12 ausgeführt sein, da an sie nicht so hohe Anforderungen gestellt werden, wie an den Zwischenfrequenzverstärker 12, dessen Eigenschaften wesentlich für die Wiedergabequalität des Empfangsgerätes sind.

Die Steuereingänge 17, 18 der Hilfs-Zwischenfrequenzverstärker 13, 14 sind an Ausgänge der Vergleichsschaltung 8 mit unterschiedlicher Signalpolarität angeschlossen.

Bei der dargestellten Stellung des Umschalters 11 ist vorausgesetzt, daß das Signal der Antenne 1 größer als das Signal der Antenne 2 ist. Dabei ist die Verstärkung des Hilfs-Zwischenfrequenzverstärkers 13 etwas größer eingestellt als diejenige des Hilfs-Zwischenfrequenzverstärkers 14.

Sinkt nun der Ausgangspegel des Tuners 3 unter den Ausgangspegel des Tuners 4, so erfolgt solange noch keine Umschaltung, als die Differenz kleiner ist, als es durch die unterschiedliche Verstärkungseinstellung bedingt ist. Erst wenn das Ausgangssignal des Tuners 3 diesen Wert unterschreitet, ändert sich die Ausgangsspannung des Komparators 9, was zu einer Umschaltung des Schalters 11 führt. Gleichzeitig wird die Verstärkung des Hilfs-Zwischenfrequenzverstärkers 14 heraufgesetzt und die Verstärkung des Hilfs-Zwischenfrequenzverstärkers 13 vermindert. Dadurch kann erst wieder eine Rückschaltung zum Tuner 3 erfolgen, wenn die Ausgangsspannung des Tuners 4 deutlich kleiner als die Ausgangsspannung des Tuners 3 ist. Durch einen geringen Pegeleinbruch durch die Belastung des Ausgangs des Tuners 4 mit dem Eingangswiderstand des Zwischenfrequenzverstärkers 12 wird keine Rückschaltung verursacht. Ebenso wenig führen kleine Änderungen der Feldstärke zum Umschalten.

Grundsätzlich kann eine Hysterese auch durch entsprechende Steuerung der Verstärkung nur eines der Hilfs-Zwischenfrequenzverstärker 13, 14 erzielt werden. Aus Symmetriegründen wird jedoch häufig die Steuerung beider Hilfs-Zwischenfrequenzverstärker vorzuziehen sein.

## Ansprüche

1. Verfahren zum Empfang von Radiowellen mit mehreren Antennen, wobei mehrere Zwischenfrequenzsignale gebildet werden, der Pegel jedes der Zwischenfrequenzsignale gemessen wird und durch Vergleich der gemessenen Pegelwerte eine Auswahl zwischen den Zwischenfrequenzsignalen getroffen wird, dadurch gekennzeichnet,
daß die Zwischenfrequenzsignale mit steuerbaren Übertragungsfaktoren zur Pegelmessung geleitet werden und

daß bei Änderung der Auswahl der Übertragungsfaktor des zuvor ausgewählten Zwischenfrequenzsignals gegenüber dem Übertragungsfaktor des neu ausgewählten Zwischenfrequenzsignals verringert wird.

2. Schaltungsanordnung zur Durchführung des Verfahrens nach Anspruch 1, dadurch gekennzeichnet, daß jeweils einer Antenne (1, 2) eine Abstimmschaltung (3, 4) zugeordnet ist,
daß die Ausgänge der Abstimmschaltungen (3, 4) mit Eingängen je einer Pegelmeßschaltung (6, 7) und mit je einem Eingang eines Umschalters (11) verbunden sind,
daß an den Ausgang des Umschalters (11) ein Zwischenfrequenzverstärker (12) angeschlossen ist,
daß Ausgänge der Pegelmeßschaltungen (6, 7) mit Eingängen einer Vergleichsschaltung (8) verbunden sind und
daß mindestens ein Ausgang der Vergleichsschaltung (8) mit einem Steuereingang (17, 18) einer Pegelmeßschaltung (6, 7) verbunden ist.

3. Schaltungsanordnung nach Anspruch 2, dadurch gekennzeichnet,
daß die Pegelmeßschaltungen (6, 7) aus je einem Hilfs-Zwischenfrequenzverstärker (13, 14) und je einem Amplitudenmodulator (15, 16) bestehen.

4. Schaltungsanordnung nach Anspruch 3, dadurch gekennzeichnet,
daß die Verstärkung der Hilfs-Zwischenfrequenzverstärker (13, 14) mit einer dem Steuereingang (17, 18) zugeführten Steuerspannung steuerbar ist.

5. Schaltungsanordnung nach Anspruch 4, dadurch gekennzeichnet,
daß zwei Abstimmschaltungen (3, 4) und zwei Pegelmeßschaltungen (6, 7) vorgesehen sind,
daß die Vergleichsschaltung (8) einen Differenzverstärker (9) und zwei Ausgänge mit zueinander gegenläufigen Steuerspannungen umfaßt und
daß jeweils ein Ausgang der Vergleichsschaltung (8) mit dem Steuereingang (17, 18) einer der Pegelmeßschaltungen (6, 7) verbunden ist.

Fig.1

Fig. 2